# EUROPEAN PATENT APPLICATION

(11) **EP 4 636 545 A1**
(43) Date of publication of application: **22.10.2025**
(21) Application number: 24818494.7
(22) Date of filing: 22.05.2024
(51) Int. Cl.: G06F 3/01

(54) **LIGHT FIELD DISPLAY METHOD AND SYSTEM, AND STORAGE MEDIUM**

(30) Priority: 06.06.2023 CN 202310665056
(71) Applicant: Beijing Shiyan Technology Co., Ltd., Beijing 100176 (CN)
(72) Inventor: SUN, Jiankang, Beijing 100176 (CN); WU, Zhongyuan, Beijing 100176 (CN); DONG, Xue, Beijing 100176 (CN); XUE, Yachong, Beijing 100176 (CN); BAI, Guang, Beijing 100176 (CN); YAN, Guixin, Beijing 100176 (CN); SHAO, Jiyang, Beijing 100176 (CN)
(74) Representative: Potter Clarkson
(86) International application number: PCT/CN2024/094610
(87) International publication number: WO 2024/250961

(57) **Abstract**

The present application relates to the technical field of three-dimensional imaging. Disclosed are a light field display method and system, and a storage medium. The method comprises: collecting original image data, wherein the original image data comprises a facial image, an eye image and a gesture image; performing identification on the original image data, so as to acquire corresponding interaction data, wherein the interaction data comprises the spatial position of a face, the spatial position of a point of fixation, the spatial position of a gesture and the category of the gesture; sending the interaction data to a content generation unit, so as to acquire content to be displayed, which is rendered by the content generation unit on the basis of the interaction data; and performing data rearrangement according to said content in combination with the interaction data, so as to acquire light field data, and displaying the light field data. By means of the present solution, the interaction delay can be effectively reduced.

## Description

### CROSS-REFERENCE TO RELATED APPLICATIONS

The present disclosure claims priority to Chinese patent application No. 202310665056.8, filed on June 6, 2023 and titled "LIGHT FIELD DISPLAY METHOD AND SYSTEM, STORAGE MEDIUM", the entire content of which is incorporated herein by reference in its entirety.

### TECHNICAL FIELD

The present disclosure relates to the technical field of three-dimensional imaging, and in particular to a light field display method based on active interactive detection, a light field display system based on active interactive detection, and a storage medium.

### BACKGROUND

In nature, a human eye can receive light emitted by objects and thus see three-dimensional objects. However, traditional display solutions can only present two-dimensional images, and generation and display of content cannot fully express visual information of respective dimensions, resulting in poor display effects.

It should be noted that the information disclosed in the background technology section is only used to enhance the understanding of the background of the present disclosure, and therefore may include information that does not constitute prior art known to those of ordinary skill in this art.

### SUMMARY

According to an aspect of the present disclosure, there is provided a light field display method. The method is applied to a light field display system. The method includes: collecting raw image data; performing recognition of the raw image data to obtain corresponding interaction data, wherein the interaction data includes any one or a combination of any number of: a human face spatial position, a fixation point spatial position, a gesture spatial position and a gesture category; sending the interaction data to a content generation unit to obtain content to be displayed which is rendered by the content generation unit based on the interaction data; and performing data rearrangement according to the content to be displayed in combination with the interaction data to obtain light field data, and displaying the light field data.

**In** an example embodiment of the present disclosure, rendering of the content to be displayed by the content generation unit based on the interaction data, includes: calculating an overlapping region based on the gesture spatial position and a position of currently displayed content; when it is determined that the overlapping region exists, determining updated content corresponding to the currently displayed content according to the gesture category, and rendering the updated content to obtain the content to be displayed.

In an example embodiment of the present disclosure, rendering the updated content to obtain the content to be displayed includes: determining a high-definition region, a low-definition region of the updated content according to the fixation point spatial position; and rendering the high-definition region, the low-definition region respectively to obtain the content to be displayed.

In an example embodiment of the present disclosure, the raw image data includes a human face image. Performing recognition of the raw image data to obtain the corresponding interaction data includes: performing recognition of the human face image to determine a human face ROI region in the human face image; determining a corresponding human face spatial position based on the human face ROI region; and updating the human face ROI region according to a preset rule, and performing human face tracking based on the updated human face ROI region.

In an example embodiment of the present disclosure, the raw image data includes an eye image. Performing recognition of the raw image data to obtain the corresponding interaction data includes: performing image recognition on the eye image to determine an eye ROI region in the eye image; determining a corresponding fixation point spatial position based on the eye ROI region; and updating the eye ROI region according to a preset rule, and performing eye tracking using the updated eye ROI region.

In an example embodiment of the present disclosure, the raw image data includes a gesture image. Performing recognition of the raw image data to obtain the corresponding interaction data includes: performing image recognition on the gesture image to determine a hand ROI region; determining a corresponding hand spatial position based on the hand ROI region; updating the hand ROI region according to a preset rule, and performing hand tracking using the updated hand ROI region; and performing recognition of the hand ROI region using a gesture recognition model to determine a corresponding gesture category.

In an example embodiment of the present disclosure, the method further includes: in response to a trigger operation, configuring a corresponding ROI region for respective sensor used to collect the raw image data.

In an example embodiment of the present disclosure, the method further includes: in response to a configuration instruction, configuring a rendering mode of the content generation unit.

In an example embodiment of the present disclosure, collecting the raw image data includes: collecting a human face image using a plurality of grayscale cameras, collecting a human eye image using an IR camera, collecting a gesture image using a depth camera; wherein the plurality of grayscale cameras, the IR camera, the depth camera are arranged on a side of a light field display unit.

According to an aspect of the present disclosure, there is provided a light field display system, including:
an active detection unit configured to collect raw image data;
an interaction information calculation unit configured to receive the raw image data, perform recognition of the raw image data to obtain corresponding interaction data, and send the interaction data to a content generation unit, wherein the interaction data includes any one or a combination of any number of: a human face spatial position, a fixation point spatial position, a gesture spatial position and a gesture category;
a display data processing unit configured to receive content to be displayed which is rendered by the content generation unit, and perform data rearrangement in combination with the interaction data and a pixel arrangement map to obtain light field data; and
a light field display unit configured to display the light field data.

In an example embodiment of the present disclosure, the interaction information calculation unit configures an ROI region for a respective sensor in the active detection unit in response to trigger information.

In an example embodiment of the present disclosure, the display data processing unit sends a synchronization signal to the interaction information calculation unit, so that the interaction information calculation unit completes calculation of the interaction data in response to the synchronization signal.

In an example embodiment of the present disclosure, the interactive active detection unit is arranged on a side of a light field display unit, and includes a plurality of grayscale cameras, an IR camera, a depth camera; wherein the grayscale cameras are used to collect a human face image, the IR camera is used to collect a human eye image, the depth camera is used to collect a gesture image.

According to an aspect of the present disclosure, there is provided a storage medium having a computer program stored thereon, wherein when the computer program is executed by a processor, the light field display method according to any one of the above embodiments is implemented.

According to the light field display method provided by the present disclosure, by collecting the raw image and identifying the raw image, the corresponding interaction data can be determined; and the content generation unit can be used to generate the content to be displayed based on the interaction data, and data rearrangement is performed on the content to be displayed, so that the light field data can be displayed to realize active interaction.

It is to be understood that the foregoing general description and the following detailed description are illustrative and explanatory only and are not restrictive of the present disclosure.

### BRIEF DESCRIPTION OF THE DRAWINGS

The drawings herein, which are incorporated into the specification and constitute a part of the specification, show embodiments consistent with the present disclosure, and together with the specification, serve to explain the principles of the present disclosure. Obviously, the drawings described below are only some embodiments of the present disclosure, and for those of ordinary skill in this art, other drawings can be obtained based on these drawings without creative work. In the drawings:
FIG. 1 schematically shows a composition diagram of a light field display system according to an example embodiment of the present disclosure;
FIG. 2 schematically shows a schematic diagram of a camera arrangement;
FIG. 3 schematically shows a light field display method according to an example embodiment of the present disclosure;
FIG. 4 schematically shows a schematic diagram of a procedure of a method for calculating a human face spatial position according to an example embodiment of the present disclosure;
FIG. 5 schematically shows a schematic diagram of a procedure of a method for calculating a fixation point spatial position according to an example embodiment of the present disclosure;
FIG. 6 schematically shows a schematic diagram of a procedure of method for calculating a human hand spatial position and a gesture type according to an example embodiment of the present disclosure;
FIG. 7 schematically shows a schematic diagram of marking a human face ROI region according an example embodiment of the present disclosure;
FIG. 8 schematically shows a schematic diagram of marking a human eye ROI region according to an example embodiment of the present disclosure;
FIG. 9 schematically shows a schematic diagram of a hand ROI region marking according an example embodiment of the present disclosure.

### DETAILED DESCRIPTION

Example implementations will now be described more fully with reference to the accompanying drawings. However, example implementations can be implemented in a variety of forms and should not be construed as limited to the examples set forth herein; rather, these implementations are provided to make the present disclosure more comprehensive and complete and to fully convey the concepts of the example implementations to those skilled in the art. The described features, structures, or characteristics may be combined in any suitable manner in one or more implementations.

In addition, the accompanying drawings are only schematic illustrations of the present disclosure and are not necessarily drawn to scale. The same reference numerals in the figures represent the same or similar parts, and thus their repeated description will be omitted. Some of the block diagrams shown in the accompanying drawings are functional entities and do not necessarily correspond to physically or logically independent entities. These functional entities can be implemented in a software form, or implemented in one or more hardware modules or integrated circuits, or implemented in different networks and/or processor apparatuses and/or microcontroller apparatuses.

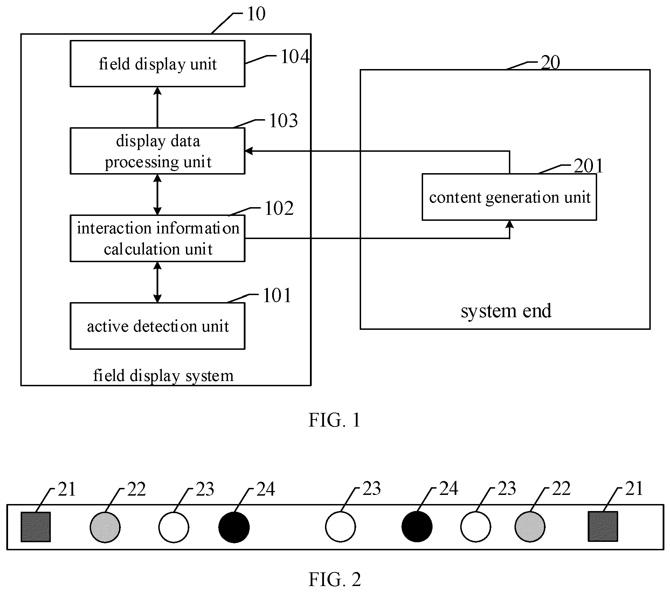

In view of shortcoming(s) and deficiency(deficiencies) of related art, a light field display system 10 is provided an example implementation. The light field display system 10 may be used as a display terminal. Referring to FIG. 1, the system 10 includes: an active detection unit 101, an interaction information calculation unit 102, a display data processing unit 103, and a light field display unit 104. The active detection unit 101 is connected to the interaction information calculation unit 102, the interaction information calculation unit 102 is connected to the display data processing unit 103, and the display data processing unit 103 is connected to the light field display unit 104. The active detection unit 101 may be configured to collect raw image data. The raw image data includes: a human face image, an eye image, a gesture image. The interaction information calculation unit 102 may be configured to receive the raw image data collected by the active detection unit, and perform recognition of the raw image data to obtain corresponding interactive data; and send the interactive data to a content generation unit 201. The display data processing unit 103 may be configured to receive content to be displayed which is rendered by the content generation unit 201, and to perform data rearrangement in combination with the interaction data and a pixel arrangement map to obtain light field data, and send the light field data to the light field display unit 104. The light field display unit 104 may be configured to display the light field data.

The active detection unit may receive range of interesting (ROI) control data, such as ROI coordinates (x, y, w, h) from the interaction information calculation unit through Inter-Integrated Circuit (I2C)/Serial Peripheral Interface (SPI). On the other hand, it may also send real-time collected raw image data (raw data) to the interaction information calculation unit through Mobile Industry Processor Interface (Mipi)/Universal Serial Bus (USB).

Specifically, the active detection unit may include a plurality of grayscale cameras, IR camera(s), depth camera(s) and infrared LED(s). A grayscale camera may collect grayscale images, which may be used to detect a spatial position of a human face relative to a screen, and the number is 2n, where n is a positive integer. The spatial position of the human face relative to the screen may be determined by binocular ranging. Specifically, multiple groups of grayscale cameras may be set to achieve large-scale human face tracking. An IR camera (infrared camera) may collect infrared images to accurately capture the movement of a human eye pupil, and then obtain a spatial gaze position of the human eye based on the movement of the human eye pupil. Similarly, multiple groups of IR cameras may be set to obtain a larger detection range by splicing multiple groups. A depth camera (not limited to structured light or TOF camera) may be used to collect depth images, which are used to capture the movement of a human hand to determine a corresponding gesture operation. An infrared LED is used to provide 850 nm supplemental light for an IR camera to improve image quality. As shown in FIG. 2, the cameras included in the active detection unit 101 may be arranged as spaced apart. For example, an infrared LED 21, a depth camera 22, a group of IR cameras 23, and a group of grayscale cameras 24 are arranged in sequence in a certain direction to form a camera group. Multiple camera groups may be set.

The light field display unit may be configured to receive data which is processed by the display data processing unit, and display the data to restore the real light field information. The light field display unit may be formed by an ultra-high resolution display panel and an optical light control device. The pixel arrangement of the display panel may be conventional RGB or a pixel island RGB arrangement. The optical light control device may be a physical lens or a liquid crystal lens for light control.

The light field display system may exchange data with the system end 20. For example, the system end may be a smart terminal device such as a computer or a tablet computer. The system end 20 may include the content generation unit 201. The content generation unit 201 is configured to receive the interaction data transmitted by the interaction information calculation unit, and perform calculation using the interaction data and generate the content required for the light field display, and render the content to be displayed. The procedure maybe as follows. Based on the calculated coordinates of a human face center/glabella as a reference, and 2~n cameras may be set on the left and right according to the optical design to collect image content under multiple views; and then the image content is transmitted to the display data processing unit. The interaction data may include a human face spatial position, a fixation point spatial position, a gesture spatial position, and a gesture category.

For example, the light field display system may be used as a display end. By setting the interaction information calculation unit and the display data processing unit, the collected image data can be processed at the display front end to obtain the ROI region in the image, thereby realizing efficient data processing and low-latency interaction. A display device with the active detection function is provided.

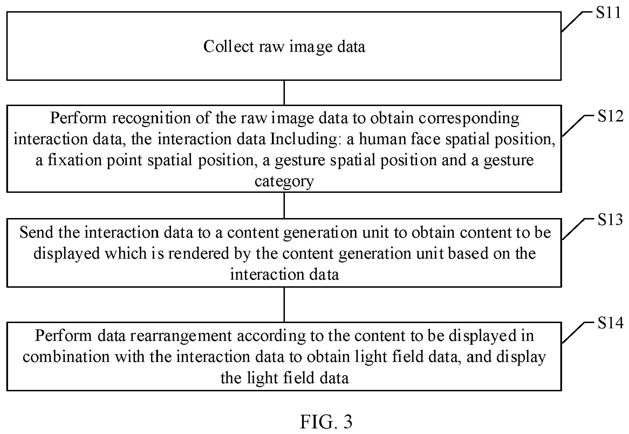

An example implementation provides a light field display method. The method may be applied to the above light field display system. Referring to FIG. 3, the method may include:
In step S11, raw image data is collected.
In step S12, recognition of the raw image data is performed to obtain corresponding interaction data. The interaction data includes: a human face spatial position, a fixation point spatial position, a gesture spatial position and a gesture category.
In step S13, the interaction data is sent to a content generation unit to obtain content to be displayed which is rendered by the content generation unit based on the interaction data.
In step S14, data rearrangement is performed according to the content to be displayed in combination with the interaction data to obtain light field data, and the light field data is displayed.

The light field display method provided in this example implementation integrates these functions at the display end by realizing collection and recognition of raw image data and data rearrangement at the display end, without occupying system resources.

Each step of the light field display method in this example implementation will be described below in more detail with reference to the accompanying drawings and implementations.

In step S11, raw image data is collected.

In the example implementation, an active detection unit may be provided for collecting raw image data. The raw image data includes: a human face image, an eye image, a gesture image. As shown in FIG. 2, the active detection unit may include a plurality of grayscale cameras, IR camera(s), depth camera(s), and infrared LED(s). The human face image may be collected using a plurality of grayscale cameras, the human eye image may be collected using the IR camera(s), and the gesture image may be collected using the depth camera(s). For example, a naked-eye 3D display device may be provided, on which the above-mentioned light field display system is provided; the active detection device may be provided on a side of the display device. A user may maintain a certain spatial position with respect to the display device, for example, standing in front of the display device. And, the human face image, the eye image, and the gesture image of the user may be collected in real time using the active detection unit. In the initial state, the raw images collected by respective cameras may be images within the current region.

In step S12, recognition of the raw image data is performed to obtain corresponding interaction data, wherein the interaction data includes: a human face spatial position, a fixation point spatial position, a gesture spatial position and a gesture category.

In the example implementation, the step S12 may include:
In step S21, the human face image is recognized to determine a human face ROI region in the human face image.
In step S22, a corresponding human face spatial position is determined based on the human face ROI region.
In step S23, the human face ROI region is updated according to a preset rule, and human face tracking is performed based on the updated human face ROI region.

Specifically, an interaction information calculation unit may be provided. The interaction information calculation unit may receive the raw image data sent by the active detection unit and perform calculation on the image data. When calculating the human face spatial position, the interaction information calculation unit may receive a grayscale image collected by a grayscale camera as the human face image, and use a binocular ranging algorithm to perform calculation on the grayscale image to determine the spatial position of the human face relative to the screen of the display device. When multiple groups of grayscale cameras are arranged in the active detection unit, multiple groups of grayscale images may be provided to the interaction information calculation unit, and the interaction information calculation unit may calculate multiple human face spatial positions based on the multiple groups of grayscale images.

In the initial state, the grayscale camera collects all the content of the current field of view as an initial human face image, and sends the initial human face image to the interaction information calculation unit. The interaction information calculation unit may first perform image recognition on the initial human face image to determine a human face ROI region and corresponding coordinate information (x, y, w, h). Then, the interaction information calculation unit uses the binocular ranging algorithm to calculate a corresponding human face spatial position according to the human face ROI region. Specifically, the interaction information calculation unit may use a human face detection model based on deep learning to perform human face recognition on the collected grayscale image and determine the human face ROI region in the grayscale image. Then, based on the binocular ranging algorithm, calculation of the human face ROI region is performed on the obtained initial human face image to determine the initial human face spatial position. For example, the binocular ranging algorithm generally needs to calibrate the binocular cameras first to obtain the intrinsic and extrinsic parameters and homography matrix of the two cameras. Then, the collected initial face image may be rectified according to the calibration result, and the two rectified images are located in the same plane and parallel to each other. The two rectified images are pixel matched to obtain a disparity image. The depth of each pixel is calculated according to the matching result to obtain a depth map; and then the human face spatial position is determined. The spatial position calculation based on the binocular ranging algorithm can be obtained by conventional means, and the present disclosure does not specifically limit the specific steps of this algorithm. In addition, the interaction information calculation unit may also configure the ROI region information of the grayscale camera and the size of the bounding box, and push it to the active detection unit, so that the grayscale camera may collect small-sized grayscale images of subsequent frames according to the configured ROI region information and bounding box size, thereby realizing the accurate collection of human face images.

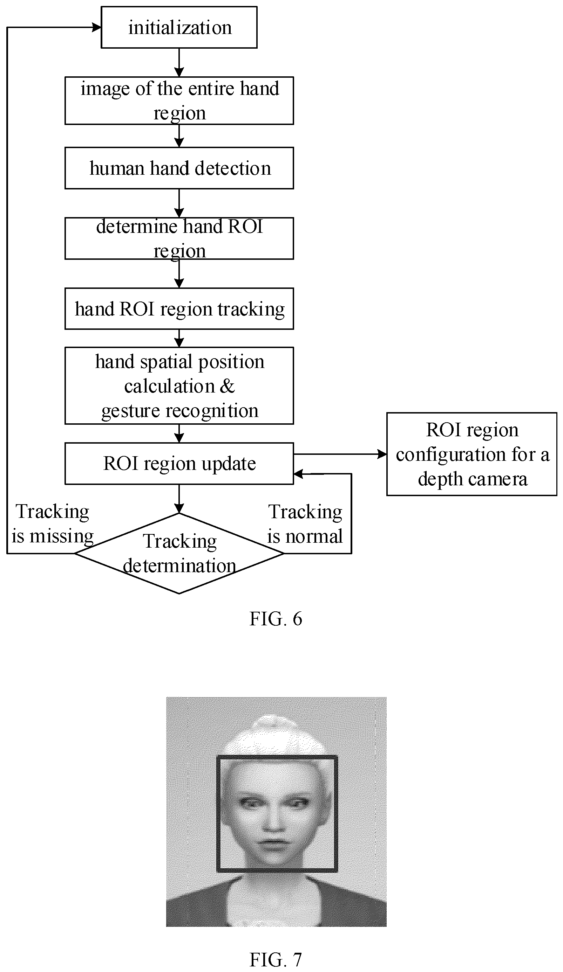

For example, for a collected initial human face image, the interaction information calculation unit may use a bounding box to mark a human face ROI region and mark corresponding coordinate information (x, y, w, h) as the updated ROI region information. For example, as shown in FIG. 7, the human face ROI region is marked with a bounding box, and the updated ROI region information is sent to the active detection unit. The active detection unit receives the updated ROI region information, and when collecting the human face image of the next frame, the grayscale image of the next frame may be re-collected according to the coordinate information in the updated ROI region information. In addition, at the same time, during the collection procedure of the subsequent frame(s), the size of the collected image may be reconfigured according to the updated ROI region information. For example, according to the size of the ROI region, enlarging may be performed according to a preset rule to obtain an enlarged size, so that the grayscale image of the next frame may be re-collected based on the updated coordinate information of the ROI region and the enlarged size, and then the grayscale image of the next frame may be sent to the interaction information calculation unit, and the human face spatial position of the next frame image is calculated. This procedure is repeated to achieve continuous tracking of the human face image. During the human face image tracking procedure, if the human face tracking fails according to the image collected based on the updated ROI region information, all the content within the field of view of the grayscale camera may be re-collected, and human face recognition and ROI region update may be performed again, thereby achieving continuous tracking.

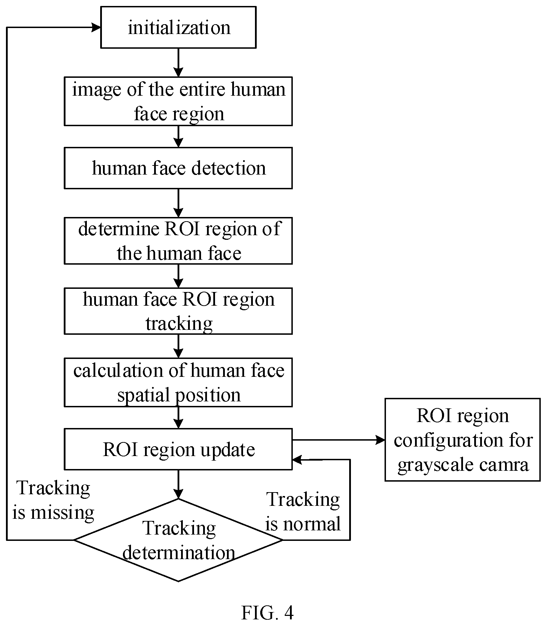

For example, referring to FIG. 4, for the interaction information calculation unit, the human face ROI region may be initialized first. In the initial state, human face detection may be performed on the collected human face region image to determine a corresponding human face ROI region, and a human face spatial position under the current grayscale image may be calculated using the binocular ranging method according to the calculation result of the human face ROI region. At the same time, the coordinate information of the human face ROI region may be updated using the human face ROI region obtained above; the small-sized image of the next frame of is re-collected using the updated human face ROI region information, and human face recognition is performed to determine whether the tracking is successful. If the tracking is successful, the ROI region information is updated according to the human face ROI region information in the image of the frame until the tracking is completed; or, if it is determined that the tracking fails in the image of the next frame, initialization is performed again, the whole human face image of full size is re-collected, and human face detection is performed again to re-execute the above method procedure. At the same time, after the ROI region information is updated, the image collection position information of the grayscale camera is configured according to the updated human face ROI region, so that the grayscale camera may collect a smaller-sized human face grayscale image. The spatial position of the human face obtained by the above method may be the spatial position of the center point of the human face, or the spatial position of the glabella, or the spatial position of the center of the human eye(s), etc.

In an example implementation, step S12 may further include:
In step S31, image recognition is performed on the eye image to determine an eye ROI region in the eye image.
In step S32, a corresponding fixation point spatial position is determined based on the eye ROI region.
In step S33, the eye ROI region is updated according to a preset rule, and eye tracking is performed using the updated eye ROI region.

Specifically, the raw image data includes an eye image. The corresponding interactive data may be the spatial position of the fixation point obtained based on the eye image. Specifically, an IR camera in the active detection unit may be used to collect the pupil image of the human eye and send it to the interaction information calculation unit. The interaction information calculation unit may use the received pupil image of the human eye to estimate the fixation point of the human eye, obtain the spatial position of the fixation point of the human eye, and track the eye ROI region.

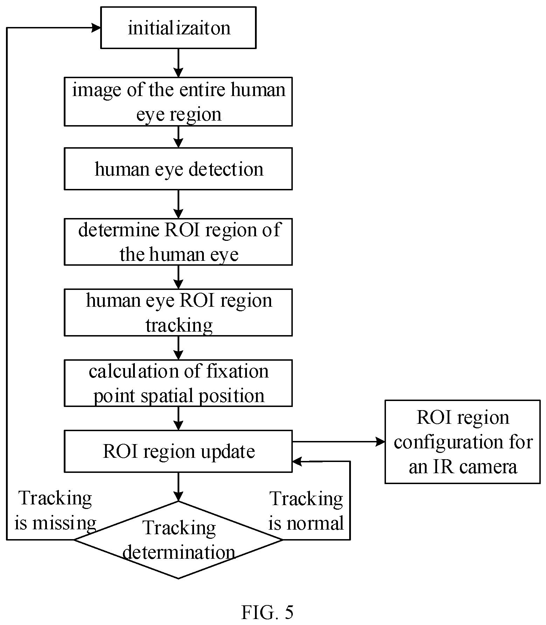

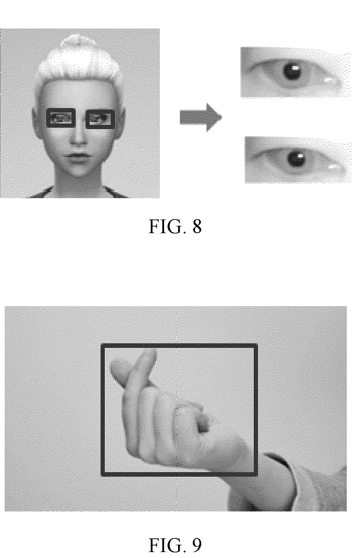

For example, referring to FIG. 5, for the interaction information calculation unit, the human eye ROI region may be initialized first. In the initial state, the initial image collected by the IR camera may be received, and the initial image may be the initial image corresponding to the entire field of view of the IR camera. The interaction information calculation unit may use a human eye detection model to directly perform human eye detection on the initial image, determine the human eye ROI region, and track the human eye ROI region. For example, referring to FIG. 8, the human eye ROI region is marked with a bounding box. Alternatively, in some embodiments, the initial image may also be firstly subjected to face detection to determine a human face region. Then, for the human face region image, the human eye features are accurately extracted and aligned to achieve human eye detection and determine the human eye ROI region. Then, based on the determined human eye ROI region, a trained fixation point estimation model may be used to calculate the fixation point spatial position to determine the fixation point spatial position information. At the same time, based on the currently determined human eye ROI region information, the human eye ROI region information may be updated. The updated human eye ROI region information may be used for ROI region configuration of the IR camera, so that the IR camera may accurately collect the human eye image according to the configured ROI region information in subsequent image collection without collect the complete scene image or human face image.

In an example implementation, step S12 may further include:
In step S41, image recognition is performed on the gesture image to determine a hand ROI region.
In step S42, a corresponding hand spatial position is determined based on the hand ROI region.
In step S43, the hand ROI region is updated according to a preset rule, and hand tracking is performed using the updated hand ROI region.
In step S44, recognition of the hand ROI region is performed using a gesture recognition model to determine a corresponding gesture category.

Specifically, the raw image data may also include a gesture image. For the interaction information calculation unit, a depth image collected in real time by a depth camera in the active detection unit may be received. Image recognition is performed on the depth image to determine the hand ROI region in the depth image and the corresponding gesture type. Based on the determined hand ROI region, the hand spatial position of the human hand may be calculated and the hand may be tracked.

For example, referring to FIG. 6, for the interaction information calculation unit, initialization may be performed first. In the initial state, the initial image collected by the depth camera in the active detection unit is received. The initial image may be a depth image captured by the depth camera of all content within the current field of view. For the depth image, a trained recognition model may be used to detect the human hand in the depth image to determine the hand ROI region in the depth image. For example, referring to FIG. 9, the hand ROI region is marked with a bounding box. Based on the hand ROI region information and the corresponding depth information, the hand spatial position information may be calculated. At the same time, a trained gesture recognition model may be used to perform gesture recognition on the hand ROI region to determine the corresponding gesture type. For the currently obtained hand ROI region information, the ROI region may be updated to determine whether the hand region is tracked successfully for the current depth image. If the current tracking is normal, the updated ROI region may be used to collect the depth image of the next frame. At the same time, the updated ROI region information may be used to configure the image collection range and position coordinates of the depth camera in the image of the next frame. Alternatively, if it is determined that tracking of the current frame image fails, that is, no hand information is recognized in the depth image, initialization may be performed again to collect an initial depth image and re-execute the above method procedure to obtain the hand spatial position information.

In step S13, the interaction data is sent to a content generation unit to obtain content to be displayed which is rendered by the content generation unit based on the interaction data.

In an example implementation, the interaction information calculation unit receives a synchronization signal from the display data processing unit, and then transmits the calculated human face spatial position (x1, y1, z1), fixation point spatial position (x2, y2, z2), gesture spatial position (x3, y3, z3) & gesture category to the content generation unit via USB/WIFI for content generation. At the same time, it can also be transmitted to the display data processing unit via I2C/SPI for content processing.

In an example implementation, the content generation unit rendering the content to be displayed based on the interaction data includes: calculating an overlapping region according to the gesture spatial position and the position of the currently displayed content; when it is determined that there is the overlapping region, determining the updated content corresponding to the currently displayed content according to the gesture category; and rendering the updated content to obtain the content to be displayed.

Specifically, for the collected gesture image of the user, a user hand coordinate system is established, and the spatial position of the gesture is marked in the coordinate system. For the current displayed content on the screen, a screen coordinate system may be established, and the spatial position of the current displayed content may be marked. Based on a coordinate system conversion matrix pre-calculated between the hand coordinate system and the screen coordinate system, the hand spatial position is converted to the screen coordinate system, so that a coordinate intersection between the user's hand and the currently displayed virtual 3D display content can be calculated. If there is an intersection of coordinates, it means that the two overlap with each other, and the user has interactive behavior with the virtual object; if the positions of the two do not overlap, it is determined that the user's hand does not interact with the virtual object. When there is interaction, the current displayed content may be updated according to the recognized user gesture category. For example, the user's gesture category may be single-click/single-tap, double-click/double-tap, rotate, etc. Correspondingly, the position and state of the currently displayed virtual 3D display may be updated according to a preset rule to obtain updated content.

In an example implementation, rendering the updated content to obtain the content to be displayed includes: determining a high-definition region, a low-definition region of the updated content according to the fixation point spatial position; and rendering the high-definition region, the low-definition region respectively to obtain the content to be displayed.

Specifically, for the virtual 3D display content currently displayed on the screen, n views may be configured, where n is a positive integer. Based on the recognized spatial position of the human eye, n/2 views may be configured for the left eye and the right eye, respectively. When using multi-view rendering, the region of interest corresponding to the currently displayed content may be calculated according to the gaze position of the human eye, and the region of interest may be configured as a high-definition region for highresolution rendering. For other region(s), it(they) may be used as low-definition region(s) and rendered with low definition. The high-definition region is then combined with the low-definition region(s) to obtain the content to be displayed.

For example, the content generation unit may be an intelligent terminal device, such as a computer, a tablet computer, or a server that performs display content calculations. The content generation unit is mainly configured to generate content required for light field display. Specifically, the content generation unit may obtain 3D display content by ray tracing. Generally speaking, the ray tracing method may include the following steps: a. emitting multiple light rays from the center of the human eye/the center of the human face/the glabella; b. extending the light rays to connect the center of a lens and the center of a sub-pixel; c. the light rays continuing to extend through the sub-pixel until they collides with an object, and assigning the color and brightness information of the collided object to the corresponding pixel; d. obtaining the 3D display content that matches the panel.

**In** an example implementation, the method further includes: configuring a rendering mode of the content generation unit in response to a configuration instruction.

Specifically, a user may configure the rendering mode of the displayed content on the terminal device. Specifically, the rendering mode may include a low-definition rendering mode, a high-definition rendering mode, and a fixation point rendering mode. The low-definition rendering mode may be that a relatively low resolution is configured for the displayed content, thereby reducing rendering requirements and transmission bandwidth. The high-definition rendering mode may be that a relatively high resolution is configured for the displayed content. The fixation point rendering mode may be that, based on the user's fixation point information, a high-definition mode is used to render the fixation point region of the displayed content, and a low-definition mode is used to render other region(s).

In step S14, data rearrangement is performed according to the content to be displayed in combination with the interaction data to obtain light field data, and the light field data is displayed.

In an example implementation, a display data processing unit may be provided. The display data processing unit, on the one hand, sends a synchronization signal to the interaction information calculation unit, and receives the interaction data sent by the interaction information calculation unit according to the synchronization timing, including: the human face spatial position, the fixation point spatial position, the gesture spatial position. On the other hand, the display data processing unit receives the display content sent from the content processing unit, then performs data rearrangement according to the interaction information, the content and the pixel arrangement of the light field display to meet the data requirements for the light field display, and then sends the data to the light field display unit.

The light field display unit is configured to receive the data processed by the display data processing unit and display the data to restore the real light field information. The light field display unit is formed by an ultra-high resolution display panel and an optical light control device. The pixel arrangement of the panel may be conventional RGB or pixel island RGB arrangement. The optical light control device may be a physical lens or a liquid crystal lens light control. Generally speaking, light field display is a technology that constructs 3D objects through ray tracing. Its principle can be expressed based on a plenoptic function containing 7 dimensional parameters, including the position of the eye (x, y, z), the horizontal angle θ of the light, the vertical angle ϕ of the light, and the wavelength λ of the light, which is used to indicate that the light intensity changes with time t.

For example, a multi-view fusion algorithm may be used to achieve multi-view naked-eye 3D display image fusion to obtain light field data. Taking 5 views as an example, the multi-view image fusion algorithm may include: 1) determining a tilt angle α of cylindrical grating arrangement, a grating period D and a sub-pixel width Dh; calculating the number N of sub-pixel points covered by a grating period; 2) calculating a sub-pixel mapping table through the tilt angle α, the number N of sub-pixel points, and the sub-pixel row and column coordinates (k, 1); 3) arranging the 5 view images vertically into a complete image according to the resolution of the display screen; 4) converting the image color space from YCrCb to RGB; 5) resizing the image and rotating it 90 degrees clockwise; 6) filling the RGB sub-pixel components of the 5 views into the corresponding RGB components of the multi-view stereo composite image according to the obtained sub-pixel mapping table. Generally speaking, for a grating naked-eye 3D display, the gratings are arranged at a certain tilt angle, and the grating pitch is set to D, which can cover N sub-pixel points in the horizontal direction. The multi-view sub-pixel mapping algorithm may be used to determine: RGB components of a pixel point P at a certain position on a given display screen should be taken from corresponding components of a pixel point in which view.

In addition, it is also possible to determine whether both eyes of the user are located at the best view based on the coordinates of the user's eyes and the coordinates of multiple views.

The light field display method provided in the embodiments of the present disclosure is applicable to the light field display system. By integrating the active detection unit, the interaction information calculation unit, and the display data processing unit at the display end, the information processing and transmission efficiency is improved, the information transmission efficiency is improved, the delay is reduced, and the data processing pressure at the system end is reduced, thereby improving the user experience of 3D display.

It should be noted that the above figures are only schematic illustrations of the processes included in the methods according to example embodiments of the present disclosure, and are not intended for limiting purposes. It is easy to understand that the processes shown in the above figures do not indicate or limit the time sequence of these processes. In addition, it is also easy to understand that these processes can be performed synchronously or asynchronously, for example, in multiple modules.

It should be noted that, although several modules or units of the device for action execution are mentioned in the above detailed description, such division is not mandatory. In fact, according to the implementations of the present disclosure, the features and functions of two or more modules or units described above can be embodied in one module or unit. On the contrary, the features and functions of one module or unit described above can be further divided into multiple modules or units to be embodied.

The flowcharts and block diagrams in the accompanying drawings illustrate the possible architecture, functions and operations of the systems, methods and computer program products according to various embodiments of the present disclosure. **In** this regard, each box in the flowcharts or block diagrams can represent a module, a program segment, or a part of a code, and the module, program segment, or the part of code contains one or more executable instructions for realizing specified logical functions. It should also be noted that in some alternative implementations, the functions marked in boxes can also occur in a different order from the order marked in the accompanying drawings. For example, two boxes represented in succession can actually be executed substantially in parallel, and they can sometimes be executed in an opposite order, depending on the functions involved. It should also be noted that each box in the block diagrams or flowcharts, and the combination of the boxes in the block diagrams or flowcharts can be implemented with a dedicated hardwarebased system that performs specified function(s) or operation(s), or can be implemented with a combination of dedicated hardware and computer instructions.

The units involved in the embodiments of the present disclosure may be implemented by software or hardware, and the units described may also be arranged in a processor. The names of these units do not, in some cases, limit the units themselves.

It should be noted that, as another aspect, the present disclosure further provides a storage medium, which may be included in an electronic device or may exist independently without being assembled into the electronic device. The storage medium carries one or more programs, and when the one or more programs are executed by an electronic device, the electronic device implements the methods described in the above embodiments.

It should be noted that the storage medium may be a computer-readable signal medium or a computer-readable storage medium or any combination of them. The computer-readable storage medium may be, for example, but not limited to, an electrical, magnetic, optical, electromagnetic, infrared, or semiconductor system, apparatus or device, or any combination of them. More specific examples of computer-readable storage media may include, but are not limited to: an electrical connection with one or more wires, a portable computer magnetic disk, a hard disk, a Random Access Memory (RAM), a Read-Only Memory (ROM), an Erasable Programmable Read-Only Memory (EPROM), a flash memory, an optical fiber, a portable Compact Disk Read-Only Memory (CD-ROM), an optical storage device, a magnetic storage device, or any suitable combination of them. In the present disclosure, a computer-readable storage medium may be any tangible medium containing or storing a program. The program may be used by or in combination with an instruction execution system, apparatus or device. In the present disclosure, a computer-readable signal medium may include a data signal propagated in a baseband or as part of a carrier wave, which carries a computer-readable program code. Such propagated data signal may take a variety of forms, including but not limited to an electromagnetic signal, an optical signal, or any suitable combination of them. The computer-readable signal medium may also be any storage medium other than computer-readable storage medium. The storage medium may send, propagate, or transmit a program to be used by or to be used in conjunction with an instruction execution system, apparatus, or device. The program code contained on the storage medium may be transmitted using any appropriate medium, including but not limited to: wireless, wired, etc., or any suitable combination of them.

In addition, the above-mentioned figures are only schematic illustrations of the processes included in the methods according to the example embodiments of the present disclosure, and are not intended for limiting purposes. It is easy to understand that the processes shown in the above-mentioned figures do not indicate or limit the time sequence of these processes. In addition, it is also easy to understand that these processes can be performed synchronously or asynchronously, for example, in multiple modules.

Other embodiments of the present disclosure will be readily apparent to those skilled in the art after considering the specification and practicing the present disclosure herein. The present disclosure is intended to cover any variations, uses, or adaptations of the present disclosure that follow the general principles of the present disclosure and include common knowledge or customary means in the art that are not invented by the present disclosure. The specification and embodiments are to be considered merely illustrative, and the true scope and spirit of the present disclosure are indicated by the claims.

## Claims

1. A light field display method, applied to a light field display system, the method comprising:
collecting raw image data;
performing recognition of the raw image data to obtain corresponding interaction data, wherein the interaction data comprises any one or a combination of any number of: a human face spatial position, a fixation point spatial position, a gesture spatial position and a gesture category;
sending the interaction data to a content generation unit to obtain content to be displayed which is rendered by the content generation unit based on the interaction data; and
performing data rearrangement according to the content to be displayed in combination with the interaction data to obtain light field data, and displaying the light field data.

2. The light field display method according to claim 1, wherein rendering of the content to be displayed by the content generation unit based on the interaction data, comprises:
calculating an overlapping region based on the gesture spatial position and a position of currently displayed content;
when it is determined that the overlapping region exists, determining updated content corresponding to the currently displayed content according to the gesture category, and rendering the updated content to obtain the content to be displayed.

3. The light field display method according to claim 2, wherein rendering the updated content to obtain the content to be displayed comprises:
determining a high-definition region, a low-definition region of the updated content according to the fixation point spatial position; and
rendering the high-definition region, the low-definition region respectively to obtain the content to be displayed.

4. The light field display method according to claim 1, wherein the raw image data comprises a human face image;
wherein performing recognition of the raw image data to obtain the corresponding interaction data comprises:
performing recognition of the human face image to determine a human face ROI region in the human face image;
determining a corresponding human face spatial position based on the human face ROI region; and
updating the human face ROI region according to a preset rule, and performing human face tracking based on the updated human face ROI region.

5. The light field display method according to claim 1, wherein the raw image data comprises an eye image;
wherein performing recognition of the raw image data to obtain the corresponding interaction data comprises:
performing image recognition on the eye image to determine an eye ROI region in the eye image;
determining a corresponding fixation point spatial position based on the eye ROI region; and
updating the eye ROI region according to a preset rule, and performing eye tracking using the updated eye ROI region.

6. The light field display method according to claim 1, wherein the raw image data comprises a gesture image;
wherein performing recognition of the raw image data to obtain the corresponding interaction data comprises:
performing image recognition on the gesture image to determine a hand ROI region;
determining a corresponding hand spatial position based on the hand ROI region;
updating the hand ROI region according to a preset rule, and performing hand tracking using the updated hand ROI region; and
performing recognition of the hand ROI region using a gesture recognition model to determine a corresponding gesture category.

7. The light field display method according to claim 1, further comprising:
in response to a trigger operation, configuring a corresponding ROI region for respective sensor used to collect the raw image data.

8. The light field display method according to claim 1, further comprising:
in response to a configuration instruction, configuring a rendering mode of the content generation unit.

9. The light field display method according to claim 1, wherein collecting the raw image data comprises:
collecting a human face image using a plurality of grayscale cameras, collecting a human eye image using an IR camera, collecting a gesture image using a depth camera;
wherein the plurality of grayscale cameras, the IR camera, the depth camera are arranged on a side of a light field display unit.

10. A light field display system, comprising:
an active detection unit configured to collect raw image data;
an interaction information calculation unit configured to receive the raw image data, perform recognition of the raw image data to obtain corresponding interaction data, and send the interaction data to a content generation unit, wherein the interaction data comprises any one or a combination of any number of: a human face spatial position, a fixation point spatial position, a gesture spatial position and a gesture category;
a display data processing unit configured to receive content to be displayed which is rendered by the content generation unit, and perform data rearrangement in combination with the interaction data and a pixel arrangement map to obtain light field data; and
a light field display unit configured to display the light field data.

11. The light field display system according to claim 10, wherein the interaction information calculation unit configures an ROI region for a respective sensor in the active detection unit in response to trigger information.

12. The light field display system according to claim 10, wherein the display data processing unit sends a synchronization signal to the interaction information calculation unit, so that the interaction information calculation unit completes calculation of the interaction data in response to the synchronization signal.

13. The light field display system according to claim 10, wherein the interactive active detection unit is arranged on a side of the light field display unit, and comprises a plurality of grayscale cameras, an IR camera, a depth camera;
wherein the grayscale cameras are used to collect a human face image, the IR camera is used to collect a human eye image, the depth camera is used to collect a gesture image.

14. A storage medium having a computer program stored thereon, wherein when the computer program is executed by a processor, the light field display method according to any one of claims 1 to 9 is implemented.
